# DEMANDE DE BREVET EUROPEEN

(11) **EP 4 763 816 A1**
(43) Date de publication de la demande: **24.06.2026**
(21) Numéro de dépôt: 24307170.1
(22) Date de dépôt: 18.12.2024
(51) Int. Cl.: C03B 40/027

(54) **MACHINE DE FORMAGE DE VERRE COMPRENANT UN BRAS MOBILE POUR LA LUBRIFICATION**

(71) Demandeur: VERALLIA PACKAGING, 92400 Courbevoie (FR)
(72) Inventeur: DAJOUX, Yannick, 21320 Commarin (FR); SAVIT, Matthieu, 81120 St. Juery (FR); HAAS, Olivier, 81800 Rabastens (FR)
(74) Mandataire: Germain Maureau

(57) **Abrégé**

Machine de formage (1) de verre comprenant au moins une section (3) de formage de verre avec au moins un moule d'ébauche (5) pour former au moins une ébauche en verre, et un mécanisme de déplacement (17) incluant : un bras mobile (19) pour la lubrification équipé d'au moins une buse d'émission (21) d'une flamme (23), le bras mobile (19) étant apte à se déplacer entre une position de lubrification dans laquelle l'au moins une buse d'émission (21) est alignée avec l'axe d'extension propre (13) correspondant ; un élément complémentaire de moulage (31) apte à se déplacer autour et le long de l'axe de déplacement (25), l'élément complémentaire de moulage (31) étant adapté pour être déplacé en une position de coopération avec l'au moins un moule d'ébauche (5) ou un élément de liaison à l'au moins un moule d'ébauche (5) et en une position rétractée, le bras mobile (19) et l'élément complémentaire de moulage (31) sont agencés pour être déplacés séparément.

## Description

### Domaine de l'invention

La présente invention concerne une machine de formage de verre comprenant un bras mobile pour la lubrification, notamment par la création d'une flamme et le dépôt de résidus de combustion dans un moule d'ébauche.

### Art antérieur

Une machine de formage de verre est destinée à la réalisation par moulage d'articles en verre creux comprenant une ouverture par laquelle de l'air est injecté pour conférer aux articles en verre leur forme. Une telle machine est appelée machine IS (IS pour « Individual Section »).

La machine de formage comprend un assemblage de guidage permettant de déposer, dans au moins une chambre d'ébauche d'un moule d'ébauche, une paraison ou goutte de verre en fusion correspondante.

Chaque paraison, disposée dans la chambre d'ébauche correspondante, est mise forme par un dispositif de soufflage d'ébauche raccordée à une ouverture de soufflage d'ébauche ménagée dans la chambre d'ébauche.

Une ébauche en verre présentant une forme creuse due au soufflage est ainsi mise en forme. L'ébauche en verre est une sorte de préforme de l'article en verre en cours de formation, l'ébauche en verre ayant déjà certains éléments définitivement formés.

La machine de formage comprend un dispositif de distribution pour amener l'ébauche en verre dans un moule de finition correspondant. Un dispositif de soufflage de finition est destiné à mettre en forme l'ébauche en verre par injection d'air à travers une ouverture correspondante ménagée dans le moule de finition. Le moule de finition est ainsi configuré pour former l'article en verre.

La machine de formage comprend ensuite un dispositif d'extraction pour retirer l'article en verre du moule de finition et le placer sur un convoyeur approprié ou une autre station de réception de la machine de formage.

Pour éviter que des défauts visibles n'apparaissent à la surface des articles en verre, une surface interne du moule d'ébauche en contact avec la paraison doit être lubrifiée. Une opération de lubrification est généralement effectuée manuellement à l'aide d'une torche de graissage c'est-à-dire un pinceau qui est trempé dans un récipient d'huile graphitée et utilisé pour recouvrir la surface interne.

Cette opération de lubrification s'avère toutefois délicate et fastidieuse à réaliser. Tout d'abord, la production d'articles en verre doit être arrêtée durant une période déterminée car le moule d'ébauche est alors inutilisable.

Un accès suffisant et sécurisé doit ensuite être ménagé pour que l'opérateur réalisant l'opération de lubrification puisse atteindre l'ensemble de la surface interne.

Lors de la remise en marche de la machine de formage, le ou les premiers articles formés peuvent présenter des défauts en raison d'une éventuelle trop grande quantité d'huile graphitée déposée. Cette opération nécessite donc un savoir-faire de la part de l'opérateur.

Par ailleurs, cette opération de lubrification n'a qu'un effet limité dans le temps et une autre opération de lubrification doit ensuite être réalisée à nouveau.

Il existe donc un besoin d'amélioration de l'opération de lubrification, notamment en limitant les interactions de l'opérateur avec la machine de formage et en limitant la période d'arrêt de la machine de formage dues à la lubrification.

La présente invention vise à résoudre tout ou partie des inconvénients mentionnés ci-dessus.

### Exposé de l'invention

A cet effet, la présente invention concerne une machine de formage de verre comprenant au moins une section de formage de verre, ladite section comprenant au moins un moule d'ébauche pour former au moins une ébauche en verre, l'au moins un moule d'ébauche présentant au moins une chambre d'ébauche destinée à recevoir une paraison correspondante pour la transformer en ébauche en verre, ladite chambre d'ébauche s'étendant selon un axe d'extension propre et présentant une ouverture de passage pour la paraison et l'ébauche en verre selon la direction d'extension propre, ladite section de formage comprenant un mécanisme de déplacement pour l'au moins un moule d'ébauche incluant :
un bras mobile pour la lubrification équipé d'au moins une buse d'émission d'une flamme, le bras mobile pour la lubrification étant apte à se déplacer autour et le long d'un axe de déplacement, parallèle à l'au moins un axe d'extension propre, entre une position rétractée dans laquelle le bras mobile est disposé hors d'une zone en regard de l'au moins une ouverture de passage selon l'au moins un axe d'extension propre et une position de lubrification dans laquelle l'au moins une buse d'émission est alignée avec l'axe d'extension propre correspondant et est apte à émettre une flamme entrant dans la chambre d'ébauche correspondante pour recouvrir une surface interne de ladite chambre d'ébauche avec des résidus de combustion ayant des propriétés de lubrification,
un élément complémentaire de moulage apte à se déplacer autour et le long de l'axe de déplacement, l'élément complémentaire de moulage étant adapté pour être déplacé en une position de coopération avec l'au moins un moule d'ébauche ou un élément de liaison à l'au moins un moule d'ébauche et en une position rétractée dans laquelle l'élément complémentaire de moulage est disposé hors de la zone en regard de l'au moins une ouverture de passage selon l'au moins un axe d'extension propre,
le bras mobile et l'élément complémentaire de moulage sont agencés pour être déplacés séparément de sorte à permettre au bras mobile d'être en position rétractée lorsque l'élément complémentaire de moulage est en position de coopération ou est en position rétractée et de sorte à permettre au bras mobile d'être en position de lubrification lorsque l'élément complémentaire de moulage est en position de coopération ou est en position rétractée.

En d'autres termes, le mécanisme de déplacement est une entité de la machine de formage de verre ayant deux éléments principaux configurés pour se déplacer indépendamment le long et autour du même axe.

L'élément complémentaire de moulage n'est pas perturbé par la présence du bras mobile pour la lubrification car les deux peuvent être en position rétractée ou non sans incompatibilités.

Ainsi, malgré un environnement restreint en place, la présente machine de formage de verre inclut un bras mobile pour la lubrification permettant d'automatiser une opération précédemment réalisée manuellement.

Ceci évite à un opérateur de stopper la machine de formage pour lubrifier manuellement les surfaces internes. La machine peut donc fonctionner en continu et lubrifier l'au moins un moule d'ébauche lorsque cela est nécessaire.

La lubrification par dépôt de résidus de combustion est avantageuse car elle permet de recouvrir l'ensemble des surfaces internes de l'au moins un moule d'ébauche avec une répartition homogène des résidus.

Il a également été observé que la couche de résidus présente une épaisseur limitée permettant de réaliser juste après la lubrification une ébauche en verre directement utilisable. Au contraire, la lubrification manuelle nécessite de jeter une ou plusieurs ébauches en verre réalisées par la suite à cause d'une trop grande quantité de lubrifiant déposé sur les surfaces internes.

La machine de formage comprend en outre un poste de découpe pour former l'au moins une paraison à partir de verre fondu. La machine de formage 1 comprend des guides et rampes pour le déplacement des paraisons.

Selon un aspect de l'invention, l'élément complémentaire de moulage est un guide de chargement présentant au moins un entonnoir adapté pour guider axialement une paraison correspondante en une position de coopération avec l'au moins un moule d'ébauche dans laquelle un passage de l'au moins un entonnoir est axialement aligné avec l'au moins une ouverture de passage correspondante.

L'élément complémentaire de moulage est ici un guide de chargement qui a pour but de protéger les surfaces internes des chambres d'ébauche lors du chargement ou de la chute de la paraison selon l'axe d'extension propre correspondant. En effet, l'axe d'extension propre est prévu pour être orienté verticalement.

Dans ce cas, l'entonnoir coopère directement par contact et complémentarité de forme avec le moule d'ébauche correspondant.

Alternativement, il est possible de prévoir comme élément complémentaire de moulage toute pièce devant coopérer par moment avec l'au moins un moule d'ébauche ou un élément de liaison à l'au moins un moule d'ébauche et devant par moment être disposée en position rétractée.

Selon un aspect de l'invention, chaque section comprend un conduit d'acheminement d'un produit pour la combustion agencé pour coopérer avec le bras mobile et alimenter la buse d'émission d'une flamme, ledit conduit d'acheminement étant raccordé à un réservoir de produit pour la combustion de la machine de formage de verre ou un raccord à une alimentation externe.

Cette disposition permet d'avoir une alimentation continue en produit pour la combustion. De préférence, le bras mobile comprend au moins une vanne pilotable par une commande de la machine de formage de verre pour émettre une flamme à un instant déterminé lorsque le bras mobile est en position de lubrification.

Selon un aspect de l'invention, les résidus de combustion comprennent et en particulier sont constitués de noir de carbone. Alternativement, les résidus de combustion peuvent être d'autres composés aux propriétés de lubrification équivalentes au noir de carbone.

Selon un aspect de l'invention, le produit pour la combustion est de la famille des alcènes. En particulier, le produit de combustion est de l'acétylène et les résidus de combustion du noir de carbone.

De préférence, lors de la lubrification, le guide de chargement est en position de coopération. Alternativement, il est possible de prévoir une lubrification par combustion lorsque le guide de chargement est en position rétractée.

Selon un aspect de l'invention, le mécanisme de déplacement comprend un arbre sur lequel sont rapportés le bras mobile pour la lubrification et l'élément complémentaire de moulage, le bras mobile pour la lubrification et l'élément complémentaire de moulage étant agencés pour se déplacer conjointement et/ou séparément selon l'axe de déplacement et pour se déplacer conjointement et séparément en rotation autour de l'axe de déplacement.

Il apparait ainsi possible de concevoir différentes coopérations entre les éléments mobiles et l'arbre. Le mécanisme de déplacement peut inclure un système de guidage hélicoïdal ou tout autre système ou combinaison de systèmes permettant les déplacements autorisés. La machine de guidage peut comprendre des moteurs électriques dédiés pour les déplacements des parties mobiles ou des systèmes à vérins hydrauliques ou pneumatiques.

Le mouvement axial peut être conjoint pour le bras mobile pour la lubrification et l'élément complémentaire de moulage. Dans ce cas, la distance axiale séparant ces éléments reste constante.

Ainsi, selon un exemple de réalisation, l'arbre peut être déplaçable selon l'axe de déplacement, en rotation autour de l'axe de déplacement et de manière hélicoïdale autour de l'axe de déplacement.

L'élément complémentaire de moulage peut être solidaire en déplacement avec l'arbre de sorte que les déplacements de l'arbre définissent les déplacements de l'élément complémentaire de moulage.

Le bras mobile peut comprendre une base montée sur l'arbre de sorte à se déplacer conjointement avec l'arbre selon l'axe de déplacement, la base étant agencée pour coopérer avec un élément fixe de la machine de formage de sorte à ne pas être déplaçable en rotation conjointement avec l'arbre.

La base peut comprendre un ergot agencé pour coopérer avec une rainure de l'élément fixe s'étendant parallèlement à l'axe de déplacement. Ainsi, même si l'arbre est en rotation, la base n'a pas de mouvement de rotation.

Le bras mobile peut en outre comprendre une partie déplaçable en rotation par rapport à la base, l'au moins une buse d'émission étant rapportée sur ladite partie déplaçable. Le bras mobile peut être pourvu d'un vérin permettant le déplacement de la partie déplaçable par rapport à la base.

Selon un aspect de l'invention, l'au moins une section comprend un mécanisme de fermeture pour l'au moins un moule d'ébauche incluant un support monté mobile en rotation et en translation selon un axe de fermeture parallèle à l'au moins un axe d'extension propre, le mécanisme de fermeture comprenant en outre un fond ébaucheur rapporté sur le support et agencé pour être déplacé par le support entre une position fermée dans laquelle le fond ébaucheur referme l'au moins une ouverture de passage par contact avec l'au moins un moule d'ébauche ou l'élément complémentaire de moulage en position de coopération.

Le fond ébaucheur permet de refermer l'au moins un moule d'ébauche : soit il coopère directement avec l'au moins un moule d'ébauche soit il coopère avec le guide de chargement qui est en position de coopération.

Le guide de chargement est utilisé selon la phase de moulage de l'ébauche en verre. Le guide de chargement n'est pas utilisé lors de la formation d'une base de l'ébauche en verre par coopération de l'ébauche en verre en formation avec le fond ébaucheur.

Selon un aspect de l'invention, la machine de formage de verre comprend au moins deux sections dont une première section et une deuxième section alignées selon un axe longitudinal, s'étendant transversalement à l'au moins un axe d'extension propre ; le mécanisme de fermeture de la première section en position rétractée, le bras mobile pour la lubrification de la deuxième section en position rétractée et l'élément complémentaire de moulage de la deuxième section en position rétractée étant configurés pour être distants les uns des autres.

Cette disposition permet de piloter les deux sections indépendamment sans risque que les éléments mobiles se trouvent à un même emplacement lorsqu'ils sont tous en position rétractée.

Selon un aspect de l'invention, le mécanisme de fermeture de la première section en position rétractée d'une part et le bras mobile pour la lubrification de la deuxième section en position rétractée et l'élément complémentaire de moulage de la deuxième section en position rétractée d'autre part sont configurés pour s'étendre dans une même zone selon l'axe longitudinal.

Cette disposition permet de réaliser un gain de place par chevauchement selon l'axe longitudinal. De préférence, le mécanisme de fermeture est distant du bras mobile pour la lubrification parallèlement à l'au moins un axe d'extension propre. Ainsi, en position rétractée, la présence du bras mobile pour la lubrification ne gêne pas les mouvements du mécanisme de fermeture de la section adjacente.

En pratique, les axes d'extension propres sont parallèles et verticaux et l'axe longitudinal est horizontal. Le mécanisme de fermeture est situé au-dessus de l'ensemble constitué par le bras mobile pour la lubrification et l'élément complémentaire de moulage. En particulier, l'élément complémentaire de moulage, le guide de chargement est situé en-dessous du bras mobile pour la lubrification.

Selon un aspect de l'invention, chaque section comprend un dispositif de soufflage d'ébauche raccordé à une ouverture de soufflage d'ébauche ménagée dans l'au moins une chambre d'ébauche.

Cette disposition permet la mise en forme de la paraison par soufflage. De préférence, l'ouverture de soufflage d'ébauche est opposée à l'ouverture de passage selon l'axe d'extension propre.

Chaque section comprend également un élément de poinçonnage mobile pour créer un creux dans la paraison avant le soufflage. La présence du creux permet de contrôler la mise en forme par soufflage et permet ainsi d'obtenir des ébauches en verre de géométrie identique en faisant grandir le creux par soufflage jusqu'à ce que la paraison s'étende et vienne prendre forme sur les parois de la chambre d'ébauche et du fond ébaucheur.

L'élément de poinçonnage est également abaissé pour le passage de gaz issus de la combustion lors de la lubrification des parois.

Par ailleurs, le dispositif de soufflage d'ébauche comprend une bague interne pour la formation du creux et du futur buvant ou goulot de l'article en verre en complément de l'élément de poinçonnage. Le dispositif de soufflage d'ébauche comprend une bague externe et un fourreau monté sur la bague externe et agencé pour permettre le coulissement de l'élément de poinçonnage.

De préférence, chaque moule d'ébauche comprend une chambre d'ébauche. Il peut également en comprendre plusieurs.

Selon une possibilité, chaque guide de chargement comprend deux entonnoirs. C'est le cas lorsque deux moules sont alignés selon un axe transversal qui s'étend transversalement à l'axe longitudinal. L'axe transversal est également transversal à l'au moins un axe d'extension propre. En pratique, l'axe transversal est horizontal.

Selon un aspect de l'invention, chaque moule d'ébauche comprend deux parties aptes à être éloignées l'une de l'autre de sorte à permettre l'extraction de l'au moins une ébauche en verre correspondante.

De préférence, chaque partie est agencée pour se déplacer en partie selon l'axe longitudinal. Notamment, chaque partie peut être agencée pour réaliser un arc de cercle centré sur un axe parallèle à l'au moins un axe d'extension propre.

Cette disposition est utile pour extraire l'ébauche en verre lorsque celle-ci est terminée. Les deux parties sont éloignées seulement lors de l'extraction. Elles coopèrent donc bien lors de la lubrification et du soufflage.

Selon un aspect de l'invention, chaque section comprend une plateforme de transfert adaptée pour extraire l'au moins une ébauche en verre de l'au moins moule d'ébauche et déposer l'au moins une ébauche en verre dans un moule de finition correspondant de ladite section.

Une partie du dispositif de soufflage d'ébauche peut être rapportée sur la plateforme de transfert, de sorte à permettre le déplacement de l'ébauche en verre par la portion de l'ébauche en verre en contact avec ladite partie.

Selon un aspect de l'invention, la plateforme de transfert est adaptée pour effectuer un déplacement rotatif de l'ébauche en verre jusqu'au moule de finition dans lequel le soufflage final peut être réalisé. Le déplacement rotatif est centré sur un axe parallèle à l'axe longitudinal.

En pratique, la paraison est gonflée par le bas dans le moule d'ébauche correspondant, puis l'ébauche en verre est gonflée par le haut dans le moule de finition correspondant.

La machine de formage de verre comprend en outre un dispositif de déplacement pourvue de pinces et un tapis convoyeur qui emmène l'article obtenu vers des systèmes de finition adaptés pour le traitement de surface, la re-cuisson, et différents contrôles avant palettisation.

La présente invention concerne également un procédé de lubrification d'au moins un moule d'ébauche d'une machine de formage de verre telle que décrite ci-dessus comprenant les étapes suivantes :
déplacer le bras mobile pour la lubrification de la position rétractée à la position de lubrification, puis
émettre par l'au moins une buse d'émission du bras mobile pour la lubrification une flamme entrant dans la chambre d'ébauche correspondante pour recouvrir une surface interne de ladite chambre d'ébauche avec des résidus de combustion ayant des propriétés de lubrification,
déplacer le bras mobile pour la lubrification de la position de lubrification à la position rétractée.

Selon un aspect de l'invention, la lubrification peut être effectuée lorsque l'élément complémentaire de moulage est en position rétractée ou en position de coopération.

Lors de la lubrification l'ouverture de passage est ouverte et les chambres d'ébauche de l'au moins un moule d'ébauche sont vides.

Selon un aspect de l'invention, un procédé de formage d'une ébauche en verre comprenant les étapes détaillées ci-dessous.

L'élément complémentaire de moulage est déplacé de la position rétractée à la position de coopération avec l'au moins un moule d'ébauche. Le bras mobile pour la lubrification est également déplacé de la position rétractée à la position de lubrification, ces deux déplacements pouvant être réalisés en même temps.

Dans cette position, l'au moins une buse d'émission du bras mobile pour la lubrification émet une flamme entrant dans la chambre d'ébauche correspondante pour recouvrir une surface interne de ladite chambre d'ébauche avec des résidus de combustion ayant des propriétés de lubrification.

Le bras mobile pour la lubrification est ensuite déplacé de la position de lubrification à la position rétractée.

L'au moins une chambre d'ébauche reçoit une paraison correspondante, puis le mécanisme de fermeture se déplace de la position rétractée à la position fermée en contact avec l'élément complémentaire de moulage.

Une mise sous pression d'une zone de l'au moins un moule d'ébauche entre le mécanisme de fermeture et la paraison est réalisée par un dispositif dédié de la machine de formage. Ceci permet à la paraison de descendre au fond du moule d'ébauche correspondant.

A la fin de cette mise sous pression, le mécanisme de fermeture est déplacé de la position fermée en contact avec l'élément complémentaire de moulage à la position rétractée, puis l'élément complémentaire de moulage est déplacé de la position de coopération avec l'au moins un moule d'ébauche à la position rétractée.

Le mécanisme de fermeture est alors déplacé de la position rétractée à la position fermée en contact avec l'au moins un moule d'ébauche, puis l'ébauche en verre est formée par soufflage avec le dispositif de soufflage. L'ébauche en verre est totalement formée et le mécanisme de fermeture peut se déplacer de la position fermée en contact avec l'au moins un moule d'ébauche à la position rétractée.

Un autre cycle peut être réalisé, par exemple à partir de l'étape de réception de la paraison. En effet, la lubrification peut ne pas être nécessaire à chaque cycle.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig. 1] est une vue schématique en coupe d'une section d'une machine de formage de verre lors du positionnement d'un bras mobile pour la lubrification.
[Fig. 2] est une vue schématique en coupe de ladite section lors de la lubrification.
[Fig. 3] est une vue schématique en coupe de la section lors de la réception d'une paraison.
[Fig. 4] est une vue schématique en coupe de ladite section et d'une partie d'une section adjacente lors de la compression de la paraison.
[Fig. 5] est une vue schématique en coupe de ladite section après la compression de la paraison.
[Fig. 6] est une vue schématique en coupe de ladite section et d'une partie de la section adjacente lors du soufflage engendrant une ébauche en verre à partir de la paraison.
[Fig. 7] est une vue schématique en coupe d'un transfert des ébauches en verre vers un moule de finition.
[Fig. 8] est une vue schématique en coupe représentant un soufflage de finition dans le moule de finition pour obtenir un article fini, ici une bouteille en verre.
[Fig. 9] est un diagramme représentant les étapes d'un procédé de lubrification du moule d'ébauche de la machine de formage de verre.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

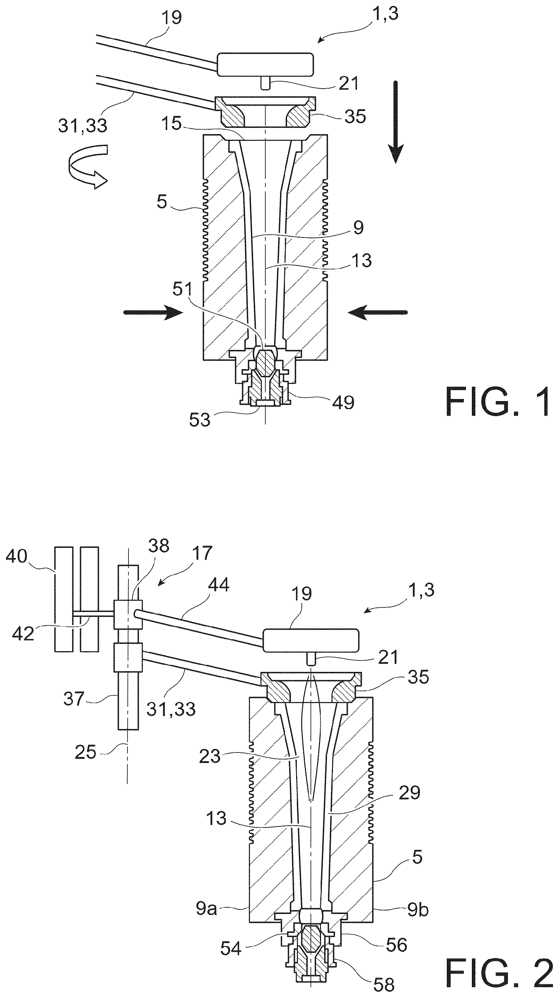

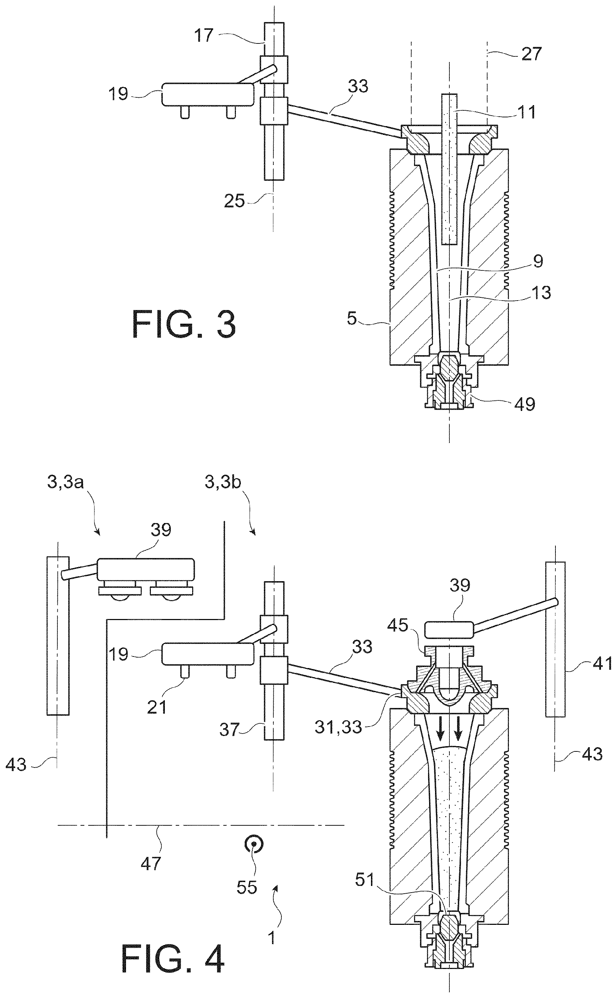

Comme illustré aux figures 1 à 6, une machine de formage 1 de verre comprend au moins une section 3 de formage de verre. La séparation entre deux section 3 est illustrée à la figure 4, il s'agit de deux unité d'une même machine de formage 1 pour produire des verres.

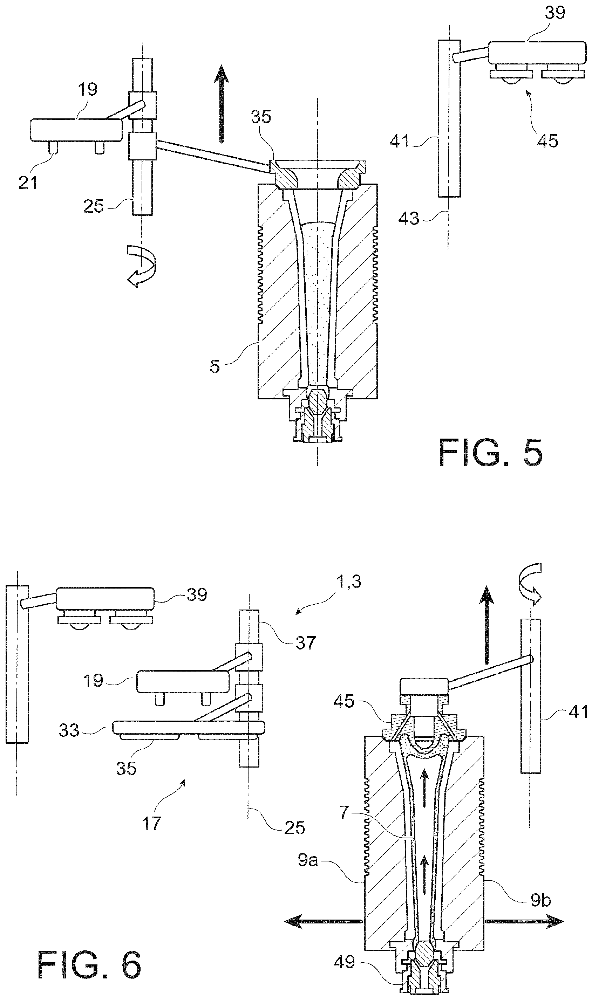

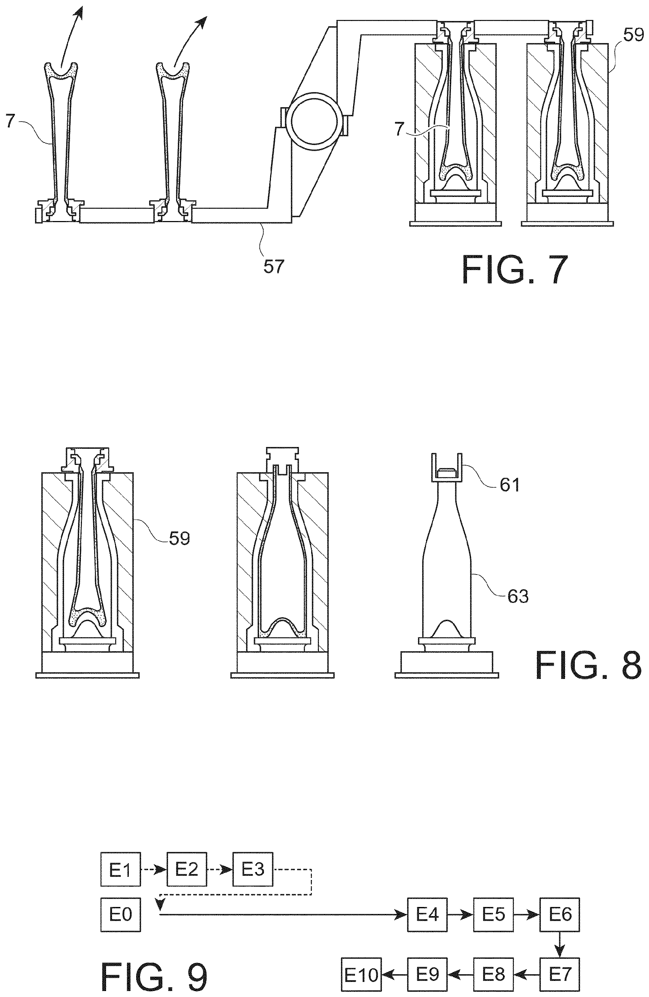

Ladite section 3 comprend un au moins un moule d'ébauche 5 pour former au moins une ébauche en verre 7 comme représentée au figures 6 et 7. L'au moins un moule d'ébauche 5 présente au moins une chambre d'ébauche 9 destinée à recevoir une paraison 11 correspondante pour la transformer en ébauche en verre 7.

Ladite chambre d'ébauche 9 s'étend selon un axe d'extension propre 13 et présentant une ouverture de passage 15 pour la paraison 11 et l'ébauche en verre 7 selon la direction d'extension propre 13.

Ladite section 3 de formage comprend un mécanisme de déplacement 17 pour l'au moins un moule d'ébauche 5.

Le mécanisme de déplacement 17 pour l'au moins un moule d'ébauche 5 inclut un bras mobile 19 pour la lubrification équipé d'au moins une buse d'émission 21 d'une flamme 23. Le bras mobile 19 pour la lubrification est apte à se déplacer autour et le long d'un axe de déplacement 25, parallèle à l'au moins un axe d'extension propre 13, entre une position rétractée représentée aux figures 3 à 6 dans laquelle le bras mobile 19 est disposé hors d'une zone 27 en regard de l'au moins une ouverture de passage 15 selon l'au moins un axe d'extension propre 13 et une position de lubrification comme représentée à la figure 2 dans laquelle l'au moins une buse d'émission 21 est alignée avec l'axe d'extension propre 13 correspondant et est apte à émettre une flamme 23 entrant dans la chambre d'ébauche 9 correspondante pour recouvrir une surface interne 29 de ladite chambre d'ébauche 9 avec des résidus de combustion ayant des propriétés de lubrification,

Le mécanisme de déplacement 17 pour l'au moins un moule d'ébauche 5 inclut un élément complémentaire de moulage 31 apte à se déplacer autour et le long de l'axe de déplacement 25, l'élément complémentaire de moulage 31 étant adapté pour être déplacé en une position de coopération avec l'au moins un moule d'ébauche 5 comme représenté aux figures 2 à 5 et en une position rétractée dans laquelle l'élément complémentaire de moulage 31 est disposé hors de la zone 27 en regard de l'au moins une ouverture de passage 15 selon l'au moins un axe d'extension propre 13.
Le bras mobile 19 et l'élément complémentaire de moulage 31 sont agencés pour être déplacés séparément de sorte à permettre au bras mobile 19 d'être en position rétractée lorsque l'élément complémentaire de moulage 31 est en position de coopération ou est en position rétractée et de sorte à permettre au bras mobile 19 d'être en position de lubrification lorsque l'élément complémentaire de moulage 31 est en position de coopération ou est en position rétractée.

En d'autres termes, le mécanisme de déplacement 17 est une entité de la machine de formage 1 de verre ayant deux éléments principaux configurés pour se déplacer indépendamment le long et autour du même axe.

L'élément complémentaire de moulage 31 n'est pas perturbé par la présence du bras mobile 19 pour la lubrification car les deux peuvent être en position rétractée ou non sans incompatibilités.

La machine de formage 1 comprend en outre un poste de découpe pour former l'au moins une paraison à partir de verre fondu stocké et/ou réceptionné par la machine de formage 1. La machine de formage 1 comprend des guides et rampes pour le déplacement des paraisons 11.

L'élément complémentaire de moulage 31 est ici un guide de chargement 33 présentant au moins un entonnoir 35 adapté pour guider axialement une paraison 11 correspondante en une position de coopération avec l'au moins un moule d'ébauche 5 dans laquelle un passage de l'au moins un entonnoir 35 est axialement aligné avec l'au moins une ouverture de passage 15 correspondante.

Le guide de chargement 33 a pour but de protéger les surfaces internes 29 des chambres d'ébauche 9 lors du chargement ou de la chute de la paraison 11 selon l'axe d'extension propre 13 correspondant. En effet, l'axe d'extension propre 13 est prévu pour être orienté verticalement.

Dans ce cas, l'entonnoir 35 coopère directement par contact et complémentarité de forme avec l'au moins un moule d'ébauche 5.

Chaque section 3 comprend un conduit d'acheminement d'un produit pour la combustion agencé pour coopérer avec le bras mobile 19 et alimenter la buse d'émission 21 d'une flamme 23, ledit conduit d'acheminement étant raccordé à un réservoir de produit pour la combustion de la machine de formage 1 de verre ou un raccord à une alimentation externe.

Cette disposition permet d'avoir une alimentation continue en produit pour la combustion.

Le bras mobile 19 comprend une ou plusieurs vannes pilotables par une commande de la machine de formage 1 de verre pour émettre une flamme 23 à un instant déterminé lorsque le bras mobile 19 est en position de lubrification.

Les résidus de combustion comprennent et en particulier sont constitués de noir de carbone.

Alternativement, les résidus de combustion peuvent être d'autres composés aux propriétés de lubrification équivalentes au noir de carbone.

Le produit pour la combustion est de l'acétylène et les résidus de combustion du noir d'acétylène.

Lors de la lubrification, le guide de chargement 33 est en position de coopération. Alternativement, il est possible de prévoir une lubrification par combustion lorsque le guide de chargement 33 est en position rétractée.

Le mécanisme de déplacement 17 comprend un arbre 37 sur lequel sont rapportés le bras mobile 19 pour la lubrification et l'élément complémentaire de moulage 31, le bras mobile 19 pour la lubrification et l'élément complémentaire de moulage 31 étant agencés pour se déplacer par rapport à l'arbre 37 conjointement ou séparément selon l'axe de déplacement 25 et pour se déplacer séparément en rotation autour de l'axe de déplacement 25.

Il apparait ainsi possible de concevoir différentes coopérations entre les éléments mobiles et l'arbre 37. Le mécanisme de déplacement 17 peut inclure un système à engrenage, un système de guidage hélicoïdal ou tout autre système ou combinaison de systèmes permettant les déplacements autorisés. La machine de guidage peut comprendre des moteurs électriques dédiés pour les déplacements des parties mobiles ou des systèmes à vérins hydrauliques ou pneumatiques.

Le mouvement axial peut être conjoint pour le bras mobile 19 pour la lubrification et l'élément complémentaire de moulage 31. Dans ce cas, la distance axiale séparant ces éléments reste constante.

Ainsi, selon un exemple de réalisation visible à la figure 2, l'arbre 37 peut être déplaçable selon l'axe de déplacement 25, en rotation autour de l'axe de déplacement 25 et de manière hélicoïdale autour de l'axe de déplacement 25.

L'élément complémentaire de moulage 31 peut être solidaire en déplacement avec l'arbre 37 de sorte que les déplacements de l'arbre 37 définissent les déplacements de l'élément complémentaire de moulage 31.

Le bras mobile 19 peut comprendre une base 38 montée sur l'arbre 37 de sorte à se déplacer conjointement avec l'arbre 37 selon l'axe de déplacement 25, la base 38 étant agencée pour coopérer avec un élément fixe 40 de la machine de formage 1 de sorte à ne pas être déplaçable en rotation conjointement avec l'arbre 37.

La base 38 peut comprendre un ergot 42 agencé pour coopérer avec une rainure de l'élément fixe 40 s'étendant parallèlement à l'axe de déplacement 25. Ainsi, même si l'arbre 37 est en rotation, la base 38 n'a pas de mouvement de rotation.

Le bras mobile 19 peut en outre comprendre une partie déplaçable 44 en rotation par rapport à la base 38, l'au moins une buse d'émission 21 étant rapportée sur ladite partie déplaçable 44. Le bras mobile 19 peut être pourvu d'un vérin permettant le déplacement de la partie déplaçable par rapport à la base 38.

Chaque section 3 comprend un mécanisme de fermeture 39 pour l'au moins un moule d'ébauche 5 incluant un support 41 monté mobile en rotation et en translation selon un axe de fermeture 43 parallèle à l'au moins un axe d'extension propre 13, le mécanisme de fermeture 39 comprenant en outre un fond ébaucheur 45 rapporté sur le support 41 et agencé pour être déplacé par le support 41 entre une position fermée représentée aux figures 4 et 6 dans laquelle le fond ébaucheur 45 referme l'au moins une ouverture de passage 15 par contact avec l'au moins un moule d'ébauche 5 ou l'élément complémentaire de moulage 31 en position de coopération.

Le fond ébaucheur 45 permet de refermer l'au moins un moule d'ébauche 5 : soit il coopère directement avec l'au moins un moule d'ébauche 5 soit il coopère avec le guide de chargement 33 qui est en position de coopération.

Le guide de chargement 33 est utilisé selon la phase de moulage de l'ébauche en verre 7. Le guide de chargement 33 n'est pas utilisé lors de la formation d'une base de l'ébauche en verre 7 par coopération de l'ébauche en verre 7 en formation avec le fond ébaucheur 45 comme représenté à la figure 6.

La machine de formage 1 de verre comprend au moins deux sections, comme cela est représenté aux figures 4 et 6, dont une première section 3a et une deuxième section 3b alignées selon un axe longitudinal 47, s'étendant transversalement à l'au moins un axe d'extension propre 13.

Le mécanisme de fermeture 39 de la première section 3a en position rétractée, le bras mobile 19 pour la lubrification de la deuxième section 3b en position rétractée et l'élément complémentaire de moulage 31 de la deuxième section 3b en position rétractée sont configurés pour être distants les uns des autres comme représenté à la figure 6.

Cette disposition permet de piloter les deux sections 3 indépendamment sans risque que les éléments mobiles se trouvent à un même emplacement lorsqu'ils sont tous en position rétractée.

Le mécanisme de fermeture 39 de la première section3a en position rétractée d'une part et le bras mobile 19 pour la lubrification de la deuxième section 3b en position rétractée et l'élément complémentaire de moulage de la deuxième section 3b en position rétractée d'autre part sont configurés pour s'étendre dans une même zone selon l'axe longitudinal 47.

Cette disposition permet de réaliser un gain de place par chevauchement selon l'axe longitudinal 47. Le mécanisme de fermeture 39 est distant du bras mobile 19 pour la lubrification parallèlement à l'au moins un axe d'extension propre 13. Ainsi, en position rétractée, la présence du bras mobile 19 pour la lubrification ne gêne pas les mouvements du mécanisme de fermeture 39 de la section 3 adjacente.

En pratique, les axes d'extension propres 13 sont parallèles et verticaux et l'axe longitudinal 47 est horizontal. Le mécanisme de fermeture 39 est situé au-dessus de l'ensemble constitué par le bras mobile 19 pour la lubrification et l'élément complémentaire de moulage 31. En particulier, l'élément complémentaire de moulage 31, le guide de chargement 33, est situé en-dessous du bras mobile 19 pour la lubrification.

Par ailleurs, le mécanisme de fermeture 39 de la première section 3a en position rétractée et le bras mobile 19 pour la lubrification de la deuxième section 3b en position rétractée sont configurés pour être distants transversalement à l'axe propre 13.

Cette disposition est utile lors des mouvements de l'arbre 37 selon l'axe de déplacement 25 qui peuvent mettre au même niveau le mécanisme de fermeture 39 et le bras mobile 19 parallèlement à l'axe de déplacement 25.

Chaque section 3 comprend un dispositif de soufflage d'ébauche 49 raccordé à une ouverture de soufflage d'ébauche 51 ménagée dans l'au moins une chambre d'ébauche 9.

Cette disposition permet la mise en forme de la paraison 11 par soufflage. L'ouverture de soufflage d'ébauche 51 est opposée à l'ouverture de passage 15 selon l'axe d'extension propre 13.

Chaque section 3 comprend également un élément de poinçonnage 53 mobile que l'on voit abaissée aux figures 5 et 6 pour créer un creux dans la paraison 11 avant le soufflage. La présence du creux permet de contrôler la mise en forme par soufflage et permet ainsi d'obtenir des ébauches en verre 7 de géométrie identique en faisant grandir le creux par soufflage jusqu'à ce que la paraison s'étende et vienne prendre forme sur les parois de la chambre d'ébauche 9 et du fond ébaucheur 45.

L'élément de poinçonnage 53 est également abaissé à la figure 2 non pour le soufflage mais pour le passage de gaz issus de la combustion lors de la lubrification des parois.

Par ailleurs, le dispositif de soufflage d'ébauche 49 comprend une bague interne 54 pour la formation du creux et du futur buvant ou goulot de l'article en verre en complément de l'élément de poinçonnage 53. Le dispositif de soufflage d'ébauche 49 comprend une bague externe 56 et un fourreau 58 monté sur la bague externe et agencé pour permettre le coulissement de l'élément de poinçonnage 53.

Ici, chaque section 3 comprend deux moules d'ébauche 5 chacun pourvu d'une chambre d'ébauche 9, les moules d'ébauche 5 étant alignés selon un axe transversal 55 représenté à la figure 4 et qui s'étend transversalement à l'axe longitudinal 47. L'axe transversal 55 est également transversal à l'au moins un axe d'extension propre 13. En pratique, l'axe transversal 55 est horizontal.

Par conséquent, chaque guide de chargement 33 comprend deux entonnoirs 35.

Chaque moule d'ébauche 5 comprend deux parties 9a, 9b aptes à être éloignées l'une de l'autre de sorte à permettre l'extraction de l'au moins une ébauche en verre 7 correspondante.

Chaque partie 9a, 9b est agencée pour se déplacer en partie selon l'axe longitudinal 47. Notamment, chaque partie peut être agencée pour réaliser un arc de cercle centré sur un axe parallèle à l'au moins un axe d'extension propre 13.

Cette disposition est utile pour extraire l'ébauche en verre 7 lorsque celle-ci est terminée. Les deux parties 9a, 9b sont éloignées seulement lors de l'extraction. Elles coopèrent donc bien lors de la lubrification et du soufflage.

Comme illustré à la figure 7, chaque section 3 comprend une plateforme de transfert 57 adaptée pour extraire l'au moins une ébauche en verre 7 de l'au moins un moule d'ébauche 5 et déposer l'au moins une ébauche en verre 7 dans un moule de finition 59 correspondant de ladite section 3.

Une partie du dispositif de soufflage d'ébauche 49 peut être rapportée sur la plateforme de transfert 57, de sorte à permettre le déplacement de l'ébauche en verre 7 par la portion de l'ébauche en verre 7 en contact avec ladite partie.

La plateforme de transfert 57 est adaptée pour effectuer un déplacement rotatif de l'ébauche en verre 7 jusqu'au moule de finition 59 dans lequel soufflage final peut être réalisée. Le déplacement rotatif est centré sur un axe parallèle à l'axe longitudinal 47.

En pratique, la paraison 11 est gonflée par le bas dans le moule d'ébauche 5, puis l'ébauche en verre 7 est gonflée par le haut dans le moule de finition 59.

Comme illustré à la figure 8, la machine de formage 1 de verre comprend en outre un dispositif de déplacement 61 pourvue de pinces pour saisir et déplacer un article en verre 63 issu du soufflage de l'ébauche en verre 7.

La machine de formage 1 de verre peut également comprendre un tapis convoyeur qui emmène l'article en verre 63 obtenu vers des systèmes de finition adaptés pour le traitement de surface, la re-cuisson, et différents contrôles avant palettisation.

La machine de formage 1 comprend un bâti apte à être positionné sur un sol plat et à inclure les éléments cité ci-dessus. Par ailleurs, la machine de formage 1 comprend une commande électrique pour réaliser les fonctions comme le déplacement des pièces mentionnées ci-dessus.

Il est maintenant décrit un procédé de lubrification d'au moins un moule d'ébauche 5 de machine de formage 1 de verre telle que décrite ci-dessus.

Comme illustré à la figure 9, une première étape E1 consiste à déplacer le bras mobile 19 pour la lubrification de la position rétractée à la position de lubrification, puis une deuxième étape E2 consiste à émettre par l'au moins une buse d'émission 21 du bras mobile 19 pour la lubrification une flamme 23 entrant dans la chambre d'ébauche 9 correspondante pour recouvrir une surface interne 29 de ladite chambre d'ébauche 9 avec des résidus de combustion ayant des propriétés de lubrification.

Enfin une troisième étape E3 consiste à déplacer le bras mobile pour la lubrification de la position de lubrification à la position rétractée.

La lubrification peut être effectuée lorsque l'élément complémentaire de moulage 31 est en position rétractée ou en position de coopération. Ici (figure 2), l'élément complémentaire de moulage 31 est en position de coopération.

Lors de la lubrification l'ouverture de passage 15 est ouverte et les chambres d'ébauche 9 sont vides c'est-à-dire dépourvue de paraison 11 ou d'ébauche en verre 7.

Un procédé de formage d'une ébauche en verre 7 comprend les étapes détaillées ci-dessous.

L'élément complémentaire de moulage 31 est déplacé de la position rétractée à la position de coopération avec l'au moins un moule d'ébauche (E0). Le bras mobile 19 pour la lubrification est également déplacé de la position rétractée à la position de lubrification (E1), ces deux déplacements pouvant être réalisés en même temps, voir figure 1.

Dans cette position, l'au moins une buse d'émission 21 du bras mobile 19 pour la lubrification émet une flamme 23 entrant dans la chambre d'ébauche 9 correspondante pour recouvrir une surface interne 29 de ladite chambre d'ébauche 9 avec des résidus de combustion ayant des propriétés de lubrification (E2), voir figure 2.

Le bras mobile 19 pour la lubrification est ensuite déplacé de la position de lubrification à la position rétractée (E3).

L'au moins une chambre d'ébauche 9 reçoit une paraison 11 correspondante (E4) voir figure 3, puis le mécanisme de fermeture 39 se déplace de la position rétractée à la position fermée en contact avec l'élément complémentaire de moulage 31 (E5).

Une mise sous pression (E6) d'une zone de l'au moins un moule d'ébauche 5 entre le mécanisme de fermeture 39 et la paraison 11 est réalisée par un dispositif dédié de la machine de formage 1, voir flèches bleues figure 4. Ceci permet à la paraison 11 de descendre au fond du moule d'ébauche 5 correspondant.

De plus, l'élément de poinçonnage 53 est en position fermée ce qui permet de créer un creux pour la mise en forme du goulot et le soufflage à venir.

A la fin de cette mise sous pression, le mécanisme de fermeture 39 est déplacé de la position fermée en contact avec l'élément complémentaire de moulage 31 à la position rétractée (E7) voir figure 5, puis l'élément complémentaire de moulage 31 est déplacé de la position de coopération avec le moule d'ébauche 5 à la position rétractée (E8).

Le mécanisme de fermeture 39 est alors déplacé de la position rétractée à la position fermée en contact avec l'au moins un moule d'ébauche 5 (E9), puis l'ébauche en verre 7 est formée par soufflage avec le dispositif de soufflage d'ébauche 49 (E10), voir figure 6.

L'ébauche en verre 7 est totalement formée et le mécanisme de fermeture 39 peut se déplacer de la position fermée en contact avec l'au moins un moule d'ébauche 5 à la position rétractée.

Un autre cycle peut être réalisé, par exemple à partir de l'étape de réception de la paraison (E4) suite au positionnement de l'élément complémentaire de moulage 31 (E0). En effet, la lubrification peut ne pas être nécessaire à chaque cycle.

Ainsi, malgré un environnement restreint en place, la présente machine de formage 1 de verre inclut un bras mobile 19 pour la lubrification permettant d'automatiser une opération précédemment réalisée manuellement.

Ceci évite à un opérateur de stopper la machine de formage 1 pour lubrifier manuellement les surfaces internes 29. La machine de formage 1 peut donc fonctionner en continu et lubrifier l'au moins un moule d'ébauche 5 lorsque cela est nécessaire.

La lubrification par dépôt de résidus de combustion est avantageuse car elle permet de recouvrir l'ensemble des surfaces internes 29 de l'au moins un moule d'ébauche 5 avec une répartition homogène des résidus.

Il a également été observé que la couche de résidus présente une épaisseur limitée permettant de réaliser juste après la lubrification une ébauche en verre 7 directement utilisable. Au contraire, la lubrification manuelle nécessite de jeter une ou plusieurs ébauches en verre 7 réalisées par la suite à cause d'une trop grande quantité de lubrifiant déposé sur les surfaces internes 29.

Comme il va de soi, l'invention ne se limite pas à la seule forme d'exécution décrite ci-dessus à titre d'exemple, elle en embrasse au contraire toutes les variantes de réalisation.

## Revendications

1. Machine de formage (1) de verre comprenant au moins une section (3) de formage de verre, ladite section (3) comprenant au moins un moule d'ébauche (5) pour former au moins une ébauche en verre (7), l'au moins un moule d'ébauche (5) présentant au moins une chambre d'ébauche (9) destinée à recevoir une paraison (11) correspondante pour la transformer en ébauche en verre (7), ladite chambre d'ébauche (9) s'étendant selon un axe d'extension propre (13) et présentant une ouverture de passage (15) pour la paraison (11) et l'ébauche en verre (7) selon la direction d'extension propre (13), ladite section (3) de formage comprenant un mécanisme de déplacement (17) pour l'au moins un moule d'ébauche (5) incluant :
- un bras mobile (19) pour la lubrification équipé d'au moins une buse d'émission (21) d'une flamme (23), le bras mobile (19) pour la lubrification étant apte à se déplacer autour et le long d'un axe de déplacement (25), parallèle à l'au moins un axe d'extension propre (13), entre une position rétractée dans laquelle le bras mobile (19) est disposé hors d'une zone (27) en regard de l'au moins une ouverture de passage (15) selon l'au moins un axe d'extension propre (13) et une position de lubrification dans laquelle l'au moins une buse d'émission (21) est alignée avec l'axe d'extension propre (13) correspondant et est apte à émettre une flamme (23) entrant dans la chambre d'ébauche (9) correspondante pour recouvrir une surface interne (29) de ladite chambre d'ébauche (9) avec des résidus de combustion ayant des propriétés de lubrification,
- un élément complémentaire de moulage (31) apte à se déplacer autour et le long de l'axe de déplacement (25), l'élément complémentaire de moulage (31) étant adapté pour être déplacé en une position de coopération avec l'au moins un moule d'ébauche (5) ou un élément de liaison à l'au moins un moule d'ébauche (5) et en une position rétractée dans laquelle l'élément complémentaire de moulage (31) est disposé hors de la zone (27) en regard de l'au moins une ouverture de passage (15) selon l'au moins un axe d'extension propre (13),
le bras mobile (19) et l'élément complémentaire de moulage (31) sont agencés pour être déplacés séparément de sorte à permettre au bras mobile (19) d'être en position rétractée lorsque l'élément complémentaire de moulage (31) est en position de coopération ou est en position rétractée et de sorte à permettre au bras mobile (19) d'être en position de lubrification lorsque l'élément complémentaire de moulage (31) est en position de coopération ou est en position rétractée.

2. Machine de formage (1) de verre selon la revendication 1, dans laquelle l'élément complémentaire de moulage (31) est un guide de chargement (33) présentant au moins un entonnoir (35) adapté pour guider axialement une paraison (11) correspondante en une position de coopération avec l'au moins un moule d'ébauche (5) dans laquelle un passage de l'au moins un entonnoir (35) est axialement aligné avec l'au moins une ouverture de passage (15) correspondante.

3. Machine de formage (1) de verre selon l'une des revendications 1 ou 2, dans laquelle chaque section (3) comprend un conduit d'acheminement d'un produit pour la combustion agencé pour coopérer avec le bras mobile (19) et alimenter la buse d'émission (21) d'une flamme (23), ledit conduit d'acheminement étant raccordé à un réservoir de produit pour la combustion de la machine de formage (1) de verre ou un raccord à une alimentation externe.

4. Machine de formage (1) de verre selon l'une des revendications 1 à 3, dans laquelle le mécanisme de déplacement (17) comprend un arbre (37) sur lequel sont rapportés le bras mobile (19) pour la lubrification et l'élément complémentaire de moulage (31), le bras mobile (19) pour la lubrification et l'élément complémentaire de moulage (31) étant agencés pour se déplacer conjointement et/ou séparément selon l'axe de déplacement (25) et pour se déplacer conjointement et séparément en rotation autour de l'axe de déplacement (25).

5. Machine de formage (1) de verre selon l'une des revendications 1 à 4, dans laquelle l'au moins une section (3) comprend un mécanisme de fermeture (39) pour l'au moins un moule d'ébauche (5) incluant un support (41) monté mobile en rotation et en translation selon un axe de fermeture (43) parallèle à l'au moins un axe d'extension propre (13), le mécanisme de fermeture (39) comprenant en outre un fond ébaucheur (45) rapporté sur le support (41) et agencé pour être déplacé par le support (41) entre une position fermée dans laquelle le fond ébaucheur (45) referme l'au moins une ouverture de passage (15) par contact avec l'au moins un moule d'ébauche (5) ou l'élément complémentaire de moulage (31) en position de coopération.

6. Machine de formage (1) de verre selon la revendication 5, comprenant au moins deux sections (3) dont une première section (3a) et une deuxième section (3b) alignées selon un axe longitudinal (47), s'étendant transversalement à l'au moins un axe d'extension propre (13) ; le mécanisme de fermeture (39) de la première section (3a) en position rétractée, le bras mobile (19) pour la lubrification de la deuxième section (3b) en position rétractée et l'élément complémentaire de moulage (31) de la deuxième section (3b) en position rétractée étant configurés pour être distants les uns des autres.

7. Machine de formage (1) de verre selon l'une des revendications 1 à 6, dans laquelle chaque section (3) comprend un dispositif de soufflage d'ébauche (49) raccordé à une ouverture de soufflage d'ébauche (51) ménagée dans l'au moins une chambre d'ébauche (9).

8. Machine de formage (1) de verre selon l'une des revendications 1 à 7, dans laquelle chaque moule d'ébauche (5) comprend deux parties (5a, 5b) aptes à être éloignées l'une de l'autre de sorte à permettre l'extraction de l'au moins une ébauche en verre (7) correspondante.

9. Machine de formage (1) de verre selon l'une des revendications 1 à 8, dans laquelle chaque section (3) comprend une plateforme de transfert (57) adaptée pour extraire l'au moins une ébauche en verre (7) de l'au moins un moule d'ébauche (5) et déposer l'au moins une ébauche en verre (7) dans un moule de finition (59) correspondant de ladite section (3).

10. Procédé de lubrification d'au moins un moule d'ébauche (5) d'une machine de formage (1) de verre selon l'une des revendications 1 à 9 comprenant les étapes suivantes :
- (E1) déplacer le bras mobile (19) pour la lubrification de la position rétractée à la position de lubrification, puis
- (E2) émettre par l'au moins une buse d'émission (21) du bras mobile (19) pour la lubrification une flamme (23) entrant dans la chambre d'ébauche (9) correspondante pour recouvrir une surface interne (29) de ladite chambre d'ébauche (9) avec des résidus de combustion ayant des propriétés de lubrification,
- (E3) déplacer le bras mobile (19) pour la lubrification de la position de lubrification à la position rétractée.
